# EUROPEAN PATENT SPECIFICATION

(11) **EP 1 745 878 B1**
(45) Date of publication and mention of the grant of the patent: **18.05.2011**
(21) Application number: 05015941.7
(22) Date of filing: 22.07.2005
(51) Int. Cl.: B23H 7/10

(54) **Injection nozzle for threading an electrode wire of an electrical discharge machine**
Düse zum Einfädeln einer Drahtelektrode in einer drahtschneidefunkenerosiven Vorrichtung
Filière pour un procédé d'enfilage automatique sur une machine d'usinage par électroérosion par fil.

(43) Date of publication of application: 24.01.2007
(73) Proprietor: Agie Charmilles SA, 6616 Losone (CH)
(72) Inventor: Müller, Gerald, 1197 Prangins (CH)
(74) Representative: De Colle, Piergiacomo

(56) References cited:
- DE-C1- 10 064 232
- US-B1- 6 344 624

## Description

The present invention relates to the improvement of an injection nozzle threading the wire electrode of a wire cut electric discharge machine from the upper wire guide, through the machining zone and aiming the entry of the lower wire guide.

Such a nozzle is known from US 6344624 which discloses in combination the features of the preamble of claim 1.

When cutting a workpiece in a traveling wire discharge electrical machine, some automatic operations require that the electrode wire be removed from the cut being carried out in the workpiece and rethreaded into another starting bore in the workpiece to proceed with another cut.

Before the start of machining, the wire electrode must be threaded in the working zone of the machine i.e. the wire extremity must be driven with great precision from the upper wire guidance head through a starting bore or a working gap in a work piece to be machined toward the lower wire guidance head.

Automatic threading or re-threading is often used when the overall machining is composed of multiple closed contours, when closed contours are cut in several partial sections, when different wire electrodes are used, or when the wire accidentally breaks during operation due to local thermal overloading.

Because the diameter of the electrode wire is less than 300 microns, up to 100 microns, and is only some micron smaller than the bore diameter of the wire guide members, automatically threading the wire through upper and lower wire guides is a rather difficult task.

The following documents deal with the issue of automatically threading the electrode wire and help to define the related domain: CH 559 599; EP 0 206 041; DE 10 064 232.

The initial step of the threading sequence consists in uniformly reducing the diameter of the electrode wire, upstream of the upper guide heads, by heating and stretching the wire over a length of about 300 mm. The heating and stretching zone is disposed upstream the upper head within a conduit surrounding the wire such as to insure uniform heating.

In a following step the wire is thermally cut off at the bottom of its section of reduced diameter, thus forming the tip of a needle, while the downstream wire portion is disposed of by the wire feeding mechanism.

The reduced diameter portion of the wire is successively introduced from above into the upper wire guide head, through a bore in the workpiece and through the lower wire guide, until the tip of the reduced diameter portion of the wire is caught by the wire feeding mechanism disposed downstream inside the lower head.

Both wire guides are closed torus shaped pieces usually made of sapphire stone set inside a metallic support ring. In order to further increase the accurate positioning of the longitudinal axis of the wire, the bore through the sapphire stone presents a narrow clearance of some microns, such as to limit to a minimum the permissible lateral play of the wire.

As soon as the tip of the upper wire portion comes down and springs out of the upper guide and during the whole threading operation, the portion of the wire of reduced diameter is guided with the help of a free concentric fluid jet of high pressure water, to overcome the distance from the upper wire guide head toward the entry of the lower wire guide.

The high pressure water jet comes out of a nozzle that is the most critical piece of the threading process. To assure the great repetitive accuracy of its outlet the said nozzle is made of ceramic i.e. a highly resistant material to abrasion and wear.

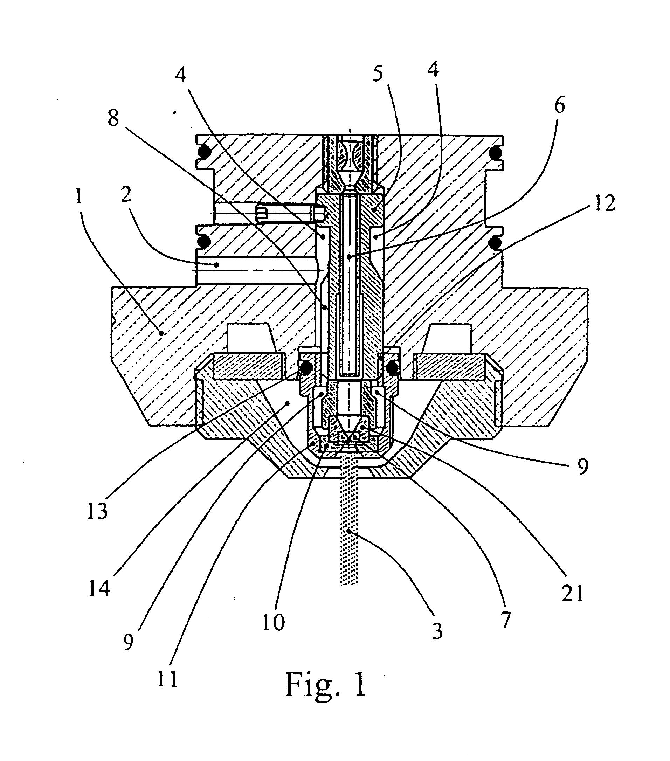

Figure 1, illustrating an upper machining head of a wire electrical discharge machine, depicts the direct environment in which the aforesaid threading nozzle is built-in.

In the masterpiece 1 a horizontal channel 2 receives the liquid under a 5 bar pressure intended to form a compact and calibrated threading jet 3 ousted downwards around the wire in the machining zone.

The horizontal channel 2 emerges in a vertical cylindrical channel 4 of which all volume is occupied by the wire guide base 5, a complex part that fulfils several critical functions. It seats precisely fitted inside the masterpiece 1 and comprises in its center the feeder canal 6 conveying the wire electrode from top towards the wire guide 7 and intended also for cooling and wetting the wire guide and contact assembly by means of a separated fluid channel. Vertical grooves 8 in the periphery of the wire guide base 5 lead the pressurized liquid dedicated to the threading function to the annular chamber 9 which feeds the threading nozzle body 10 placed under the wire guide 7. The steel ring 21 support of the sapphire wire guide 7 seats embedded inside the threading nozzle body 10. The conduits inside the chamber 9 and the threading nozzle body 10 form particularly critical flow canals as the tiniest geometric imperfections may start turbulences and ultimately disrupt the axial symmetry of the outlet jet 3.

The wire guide assembly i.e. the few parts in the vicinity of the wire guide 7, designed to be frequently disassembled, are contained in a cap 11 tightly and precisely locked against the wire guide base 5 by means of the screw thread 12. An O-ring 13 in the cap 11 ensures the sealing between the injection channel 8 intended to threading the wire and the injection room 14 for the watering of the working area during machining.

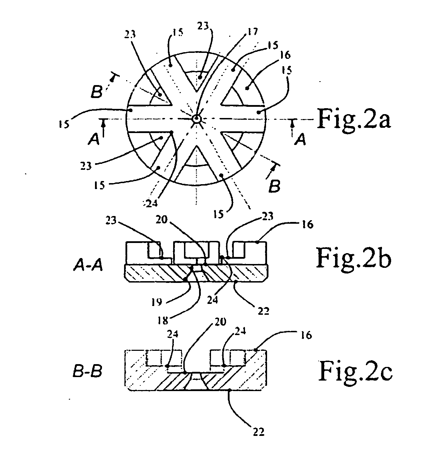

The threading nozzle body 10 (Figures 2a, 2b, 2c) cast in one piece of ceramics has the overall form of a flat cylinder including six radial grooves 15 dug in its higher face 16 and building as many channels which concentrate the pressurized liquid in the center towards the thrust mouth 17 in the form of a reversed funnel. This type of threading nozzle exists for several diameters of threading jet. The bottleneck diameter of the thrust mouth 17 can be for example 0.5 mm, 0.8 mm or 1.8 mm.

Because it becomes worn, among other reasons, the threading nozzle body 10 have to be replaced, in accordance to a procedure described in details in the customer documentation related to ROBOFIL® machines, available online from the control panel of the machines, particularly in the sections entitled "periodic maintenance" and "wear parts list" that sets out in particular the various critical parts involved in the threading operations. It also frequently occurs that the machine operator must vary the diameter of the threading jet 3 because of the use of a thinner or thicker wire or because of a change of the diameter of the starting bores inside the workpiece.

The thrust mouth 17 comprises two downwards open successive conical segments 18, 19. A first conical segment 18 of opening 30° which opens starting from the face 20 where converge the six radial grooves 15 and leads to a second conical segment 19 of opening 60° which in turn leads to the lower face 22 of the aforesaid flat cylinder constituting the threading nozzle body 10.

A coaxial facing 23 is practiced inside the higher face 16 of the part, making it possible to embed the steel ring 21 support of the sapphire wire guide 7 (see Fig. 1) when the cap 11 is screwed on the wire guide base 5.

The operation of facing 23 creates six sharp ridges 24 particularly fragile on which the steel ring 21 comes to rest. When the clamping force is not well proportioned, it can occur that these ridges 24 break in shear; that causes disturbances in the flow of the liquid in the radial grooves 15 and unbalances the axial symmetry of the liquid channel 3 at exit. Consequently, the reliability of the threading operation will be considerably reduced.

A more deplorable accident related to the brittleness of ceramics, is the rupture of the part 10 when tightened too strongly if its lower face doesn't lie perfectly flat inside of the cap 11 on its bottom.

The object of the present invention is to overcome the aforementioned weaknesses i.e. to prevent the breakage of the threading nozzle body 10 or the deterioration of the geometry of its leading channels 15.

One preferred embodiment is explained below with the aid of the figures.
Figure 1 is a cross section view through the upper machining head assembly of a ROBOFIL ® wire electrical discharge machine.
Figure 2a is an upper view of a threading nozzle body 10 casts in one piece of ceramics.
Figure 2b is a cross section view of the same piece 10 corresponding to the line A-A shown in Figure 2a.
Figure 2c is a cross section view of the same piece 10 corresponding to the line B-B shown in Figure 2a.

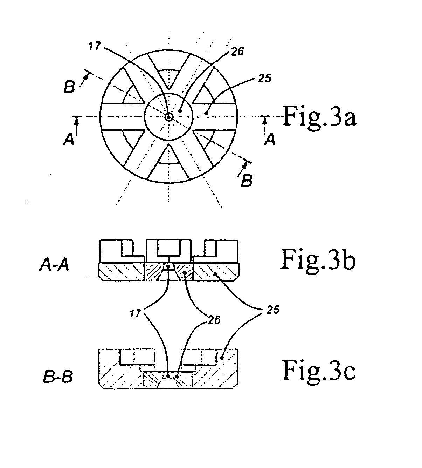

Figure 3a is an upper view of a composite threading nozzle body build in two parts object of the invention.
Figure 3b is a cross section view of the same piece corresponding to the line A-A shown in Figure 3a.
Figure 3c is a cross section view of the same piece corresponding to the line B-B shown in Figure 3a.

The solution adopted to solve the problem described hereinabove was to create as a replacement a composite piece in two parts, as described in Claim 1, out of stainless steel 25 on the one hand and ceramics 26 on the other hand. The two parts 25, 26 are assembled according to a method well known by the swiss company RAYMOND & Co SA in Lucens. The main question is here about an operation of assembly without adhesive substance which exploits the considerable forces deployed in metals by their cooling off. The ceramics inlay 26 is imprisoned inside the stainless steel crown 25 at the end of a particularly delicate operation of hooping during which the metal crown 25 is brought to thermally dilate before the ceramic inlay 26 is quickly introduced inside the calibrated boring. Then as soon as the two elements 25, 26 acquire the same temperature, the ceramics inlay 26, containing the thrust mouth 17, is strongly choked so that disassembling becomes impossible.

Ceramics, in the form of an inlay 26 hooped inside the stainless steel crown 25, was kept as a material for building the thrust mouth 17 because of its good wear resistance and its capacity to receive extremely precise geometrical forms. Aluminium oxydes Al2O3, Zirconium oxydes ZrO2, or Silicon Carbide SiC are the preferred ceramics for that application.

Because of its impact strength and its high resistance to corrosion, vacuum hardened stainless steel with a minimum 58 HRC was selected to constitute the external crown 25 support of the ceramic inlay 26 as depicted in Claim 4.

The fragile details 24 of the part 10 thus will consist of stainless steel and will no more be likely to break in shear. The principal body of the piece 25 will neither be likely to break in parts under the effect of tightening thus garanteeing the stable positioning of the threading nozzle.

It must of course be understood that the embodiment described hereinabove, of a new threading nozzle intended to replace the initial part 10, is not in any way limiting and that it can be adapted while at the same time assuring the compatibility i.e. respecting the dimensions and tolerances of the original pieces contributing to the threading process of the ROBOFIL ® machines. The simplest and economical way to ensure said compatibility is to duplicate dimensions and tolerances of the original piece 10 made exclusively of ceramics which threading effectiveness was largely shown by at least ten years of experiments. Howewer it remains possible to design different shapes of a compatible replacement piece that would yield an effecive threading jet. For instance, the ceramic inlay 26 containing the thrust mouth 17 may have a greater or lesser diameter. One can build the thrust mouth with cones of opening different from 30 or 60 degrees provided that the diameter of the threading jet is maintained and that it does not disperse before having reached the lower guide.

## Claims

1. Injection nozzle (10) for threading an electrode wire of an electrical discharge machine, **characterized in that** the injection nozzle comprises a first part (25) and a second part (26), whereby the first part (25) is made of stainless steel and constitutes an external crown support for the centrally inlaid second part (26), which first part is made in form of a flat cylinder including six radial grooves (15) dug in its higher face (16) and building channels which concentrate a pressurized liquid in the center towards a thrust mouth and comprises a cylindrical hole for the second part (26) as inlay and whereby the second part (26) is made of ceramics and contains the thrust mouth (17) which has the form of a reversed funnel, comprising two downwards open successive conical segments (18, 19), and whereby a coaxial facing (23) is practiced inside the higher face (16) of the first part making it possible to embed a steel ring (21) support of a sapphire wire guide (7) therein.

2. Injection nozzle (10) according to claim 1, **characterized in that** the first part (25) of the injection nozzle (10) is made of vacuum hardened stainless steel with a minimum 58 HRC.

3. Injection nozzle (10) according to claim 2, **characterized in that** the second part (26) is made of Aluminiumoxyde Al2O3.

4. Injection nozzle (10) according to claim 2, **characterized in that** the second part (26) is made of Zirconiumoxyde ZrO2.

5. Injection nozzle (10) according to claim 2, **characterized in that** the second part (26) made of Silicon Carbide SiC.

6. Injection nozzle (10) according to Claim 1 & 2, **characterized in that** the first part (25) and a second part (26) are assembled according to a method of hooping without adhesive substance which exploits the forces deployed in the stainless steel crown (25) by its cooling off, the ceramics inlay (26) being choked inside the stainless steel crown (25) so that disassembling becomes impossible.

## Patentansprüche

1. Strahldüse (10) zum Einfädeln einer Drahtelektrode einer Drahterosionsmaschine, **dadurch gekennzeichnet, dass** die Strahldüse einen ersten Teil (25) und einen zweiten Teil (26) umfasst, wobei der erste Teil (25) aus rostfreiem Stahl hergestellt ist und eine externe Kronenstütze für den mittig eingelegten zweiten Teil (26) bildet, wobei der erste Teil in Form eines flachen Zylinders mit sechs in seiner höheren Fläche (16) ausgebildeten Radialnuten (15) und Baukanälen, die eine druckbeaufschlagte Flüssigkeit in der Mitte zu einer Schubmündung konzentrieren, ausgebildet ist und ein zylindrisches Loch für den zweiten Teil (26) als Einlage umfasst, und wobei der zweite Teil (26) aus Keramik hergestellt ist und die Schubmündung (17) enthält, die die Form eines umgekehrten Trichters aufweist und zwei nach unten mündende, aufeinander folgende konische Segmente (18, 19) umfasst, und wobei eine koaxiale Auflage (23) in der höheren Fläche (16) des ersten Teils ausgebildet ist und ein Einbetten eines Stahlring-(21)-Trägers einer Saphirdrahtführung (7) darin ermöglicht.

2. Strahldüse (10) nach Anspruch 1, **dadurch gekennzeichnet, dass** der erste Teil (25) der Strahldüse (10) aus vakuumgehärtetem, rostfreiem Stahl mit einer Mindesthärte von 58 HRC hergestellt ist.

3. Strahldüse (10) nach Anspruch 2, **dadurch gekennzeichnet, dass** der zweite Teil (26) aus Aluminiumoxyd Al₂O₃ hergestellt ist.

4. Strahldüse (10) nach Anspruch 2, **dadurch gekennzeichnet, dass** der zweite Teil (26) aus Zirkonoxid ZrO₂ hergestellt ist.

5. Strahldüse (10) nach Anspruch 2, **dadurch gekennzeichnet, dass** der zweite Teil (26) aus Siliziumkarbid SiC hergestellt ist.

6. Strahldüse (10) nach Anspruch 1 und 2, **dadurch gekennzeichnet, dass** der erste Teil (25) und ein zweiter Teil (26) gemäß einem Umreifungsverfahren ohne Klebstoff zusammengefügt sind, das die in der Krone (25) aus rostfreiem Stahl durch ihr Abkühlen entfalteten Kräfte ausnutzt, wobei die Keramikeinlage (26) in der Krone (25) aus rostfreiem Stahl zusammengedrückt wird, so dass eine Demontage unmöglich wird.

## Revendications

1. Filière (10) pour enfiler un fil d'électrode d'une machine d'usinage par électroérosion, **caractérisée en ce que** la filière comprend une première partie (25) et une deuxième partie (26), dans laquelle la première partie (25) est constituée d'acier inoxydable et forme un support de couronne externe pour la deuxième partie encastrée de façon centrale (26), ladite première partie se présentant sous la forme d'un cylindre plat comportant six rainures radiales (15) creusées dans sa face supérieure (16), et des canaux d'accumulation qui concentrent un liquide sous pression dans le centre en direction d'une embouchure de poussée, et comportant un trou cylindrique pour l'encastrement de la deuxième partie (26), et dans lequel la deuxième partie (26) est constituée de céramique et comprend l'embouchure de poussée (17) qui a la forme d'un entonnoir inversé, comprenant deux segments coniques successifs ouverts vers le bas (18, 19), et dans lequel un dressage coaxial (23) est pratiqué à l'intérieur de la face supérieure (16) de la première partie, rendant possible l'encastrement d'un anneau d'acier (21) supportant un guide-fil de saphir (7) dans celle-ci.

2. Filière (10) selon la revendication 1, **caractérisée en ce que** la première partie (25) de la filière (10) est constituée d'un acier inoxydable durci sous vide qui présente une dureté Rockwell C (HRC) minimum de 58.

3. Filière (10) selon la revendication 2, **caractérisée en ce que** la deuxième partie (26) est constituée d'oxyde d'aluminium Al₂O₃.

4. Filière (10) selon la revendication 2, **caractérisée en ce que** la deuxième partie (26) est constituée d'oxyde de zirconium ZrO₂.

5. Filière (10) selon la revendication 2, **caractérisée en ce que** la deuxième partie (26) est constituée de carbure de silicium SiC.

6. Filière (10) selon les revendications 1 et 2, **caractérisée en ce que** la première partie (25) et une deuxième partie (26) sont assemblées selon un procédé de frettage sans substance adhésive qui exploite les forces déployées dans la couronne d'acier inoxydable (25) par son refroidissement, la pièce de céramique encastrée (26) étant serrée à l'intérieur de la couronne d'acier inoxydable (25) de telle sorte que le démontage devienne impossible.
